# EUROPÄISCHE PATENTANMELDUNG

(11) **EP 4 414 115 A2**
(43) Veröffentlichungstag der Anmeldung: **14.08.2024**
(21) Anmeldenummer: 23213683.8
(22) Anmeldetag: 01.12.2023
(51) Int. Cl.: B23K 20/12, H01M 50/105, H01M 50/117, H01M 50/119, H01M 50/124, H01M 50/178, H01M 50/557, B23K 101/38

(54) **BATTERIEPOUCHZELLE**

(30) Priorität: 19.12.2022 DE 102022213900
(71) Anmelder: VOLKSWAGEN AG, 38440 Wolfsburg (DE)
(72) Erfinder: Jamadar, Kartik, 38442 Wolfsburg (DE)

(57) **Zusammenfassung**

Die Erfindung betrifft eine Batteriepouchzelle, in deren Zellgehäuse (1) eine Elektroden-/ Separator-Anordnung (9) mit zumindest einer Ableiterfahne (11) angeordnet ist, die mit einem Zellableiter (13, 14) verbunden ist, der für einen Stromabgriff nach gehäuseaußen geführt ist, wobei die Ableiterfahne (11) und der Zellableiter (13, 14) einander überlappt sind und am Überlapp mittels Ultraschallschweißen zusammengefügt sind, wobei auf der von der Schweißstelle abgewandten Ableiterfahnen-Seite sich schweißbedingt eine raue Oberflächengeometrie mit Rauheitsspitzen (20) bildet. Erfindungsgemäß ist zwischen der rauen Oberflächengeometrie der von der Schweißstelle abgewandten Ableiterfahnen-Seite und dem Folienmaterial des Zellgehäuses (1) eine Schutzlage (18) bereitgestellt, mittels der eine Intrusion der Rauheitsspitzen (20) in das Folienmaterial des Zellgehäuses (1) unterbunden ist.

## Beschreibung

Die Erfindung betrifft eine Batteriepouchzelle nach dem Oberbegriff der Ansprüche 1, 3, 5, 7 oder 9. Zudem betrifft die Erfindung ein Verfahren zur Herstellung einer solchen Batteriepouchzelle nach Anspruch 10.

Eine Batteriepouchzelle weist ein Zellgehäuse auf, in dem eine Elektroden-/ Separator-Anordnung angeordnet ist. Die Elektroden-/ Separator-Anordnung weist zumindest eine kathodenseitige Ableiterfahne sowie eine anodenseitige Ableiterfahne auf. Jede dieser Ableiterfahnen ist mit einem Zellableiter verbunden, der für einen Stromabgriff nach gehäuseaußen geführt ist. Die jeweilige Ableiterfahne und der Zellableiter sind einander überlappt. Am Überlapp sind die Ableiterfahne und der Zellableiter mittels Ultraschallschweißen zusammengefügt. In der Dickenrichtung der Ableiterfahne betrachtet, bildet sich auf der von der Schweißstelle abgewandten Ableiterfahnen-Seite schweißbedingt eine raue Oberflächengeometrie mit Rauheitsspitzen.

Aus der US 2006/0051662 A1 ist eine Elektrodenbaugruppe bekannt. Mittels dieser wird verhindert, dass sich der Separator aufgrund von Wärme, die bei Überladung, Überentladung oder im Falle eines internen Kurzschlusses in der Nähe der Elektrodenplatten entsteht, zusammenzieht. Die Elektrodenanordnung verhindert auch einen zusätzlichen Kurzschluss zwischen den Elektrodenplatten. Aus der US 2004/0096735 A1 ist eine nichtwässrige Sekundärelektrolytbatterie mit einem stromerzeugenden Element bekannt, das durch spiralförmiges Wickeln eines Laminats aus einer positiven Elektrodenplatte, einem Trennmaterial und einer negativen Elektrodenplatte gebildet wird. Aus der DE 10 2012 002 051 A1 ist elektrochemische Energiewandlereinrichtung mit zumindest einer insbesondere wiederaufladbaren Elektrodenbaugruppe, welche vorgesehen ist, zumindest zeitweise elektrische Energie insbesondere einem Verbraucher zur Verfügung zu stellen, welche zumindest zwei Elektroden unterschiedlicher Polarität aufweist.

Die Aufgabe der Erfindung besteht darin, eine Batteriepouchzelle bereitzustellen, die im Vergleich zum Stand der Technik einen erhöhten Isolationswiderstand zwischen dem Zellgehäuse und den Zellableitern aufweist.

Die Aufgabe ist durch die Merkmale eines der Ansprüche 1, 3, 5, 7, 9 oder 10 gelöst. Bevorzugte Weiterbildungen der Erfindung sind in den Unteransprüchen offenbart.

Die Erfindung geht von einer Batteriepouchzelle aus, in deren Zellgehäuse eine Elektroden-/ Separator-Anordnung mit zumindest einer Ableiterfahne angeordnet ist, die mit einem Zellableiter verbunden ist. Der Zellableiter ist für einen Stromabgriff nach gehäuseaußen geführt. Die Ableiterfahne und der Zellableiter sind einander überlappt. Am Überlapp sind die Ableiterfahne und der Zellableiter mittels Ultraschallschweißen zusammengefügt. In Dickenrichtung der Ableiterfahne betrachtet, bildet sich auf der von der Schweißstelle abgewandten Ableiterfahne-Seite schweißbedingt eine raue Oberflächengeometrie mit Rauheitsspitzen. Gemäß dem kennzeichnenden Teil des Anspruches 1 ist zwischen der rauen Oberflächengeometrie der Ableiterfahne und dem Folienmaterial des Zellgehäuses eine Schutzlage bereitgestellt. Mittels der Schutzlage ist eine Intrusion der Rauheitsspitzen in das Folienmaterial des Zellgehäuses unterbunden. Auf diese Weis kann ein elektrischer Kontakt zwischen der Ableiterfahne und einer im Folienmaterial des Zellgehäuses befindlichen Metallschicht zuverlässig vermieden werden.

In einer technischen Umsetzung kann die Schutzlage auf der Innenseite des Zellgehäuses appliziert sein. Zudem kann die Schutzlage ein CPP-Tape (Cast-Polypropylene-Tape) sein. In der Schutzlage können Keramikpartikel eingebettet sein. Bevorzugt kann die Schutzlage eine Klebeschicht aufweisen, mittels der die Schutzlage auf der von der Schweißstelle abgewandten Ableiterfahnen-Seite angebunden ist. In diesem Fall können die Keramikpartikel unmittelbar in der Klebschicht eingebettet sein. Die Keramikpartikelschicht kann eine Dicke im Bereich von 5-10 µm aufweisen.

Alternativ und/oder zusätzlich zum obigen Erfindungsaspekt kann in einer Prozessabfolge nach dem Ultraschallschweißschritt ein Oberflächenbehandlungsschritt durchgeführt werden. Im Oberflächenbehandlungsschritt wird die raue Oberflächengeometrie auf der von der Schweißstelle abgewandten Ableiterfahnen-Seite geglättet. Beispielhaft kann der Oberflächenbehandlungsschritt ein Strahlverfahren sein, in dem die raue Oberflächengeometrie mit Keramikpartikeln beaufschlagt wird. Alternativ dazu kann auch eine Werkzeugbearbeitung erfolgen, in der die raue Oberflächengeometrie zum Beispiel mittels eines Vibrationswerkzeugs geglättet wird, und zwar ohne die Schweißstelle zu beschädigen.

In einer weiteren Ausführungsvariante kann das Zellgehäuse aus zumindest einem mehrschichtigen Folienmaterial-Zuschnitt mit zumindest einer Metallschicht gefertigt sein. Die Metallschicht liegt an einer Beschnittkante am Rand des Gehäuseflansches frei. Gemäß dem kennzeichnenden Teil des Anspruches 5 weist die Batteriepouchzelle zumindest eine Kunstsoff-Abdeckung auf, die zumindest an der Zellgehäuse-Anschlussseite die Beschnittkante überdeckt. Auf diese Weise ist ein unbeaufsichtigter elektrischer Kontakt zwischen der freiliegenden Metallschicht und dem Zellableiter unterbunden.

Das Zellgehäuse der Batteriepouchzelle ist quaderförmig mit zwei planparallelen Flachseitenwänden ausgebildet. Diese sind über Schmalseitenwände miteinander verbunden. Zumindest eine der Schmalseitenwände bildet die Zellgehäuse-Anschlussseite, an der der Zellableiter nach gehäuseaußen geführt ist. In einer bevorzugten Ausführungsvariante kann die Kunststoffabdeckung zweiteilig aus zwei Klemmbacken ausgebildet sein, die in Druckanlage mit den Fachseitenwänden des Zellgehäuses sind und eine Vorspannkraft auf das Zellgehäuse ausüben. Die beiden Klemmbacken können bevorzugt über ein Federelement miteinander gekoppelt sein.

Alternativ und/oder zusätzlich kann die Metallschicht in mehrschichtigen Folienmaterial nicht bis unmittelbar zur Randkante des Gehäuseflansches geführt sein, sondern vielmehr um ein Versatzmaß von der Randkante des Gehäuseflansches beabstandet sein. Auf diese Weise ist gewährleistet, dass die Metallschicht im Folienmaterial nach außen abgeschirmt ist. Alternativ dazu kann die Metallschicht zumindest an der Zellgehäuse-Anschlussseite bis zur Randkante des Gehäuseflansches geführt sein. In diesem Fall kann die Metallschicht jedoch mit einem Abstand zur Randkante durch einen metallfreien, elektrisch nicht leitfähigen Bereich unterbrochen sein.

Die Metallschicht kann dabei, über das Versatzmaß hinweg, mit einer elektrisch isolierenden Kunststoffschicht bis zur Randkante des Gehäuseflansches verlängert sein.

Während des Heißsiegelprozesses werden die beiden Gehäuseteile des Zellgehäuses an ihren Gehäuseflanschen mittels einer Heißsiegelnaht miteinander verbunden. Dabei wird eine innenliegenden Kunststoffschicht (d.h. PP-Schicht) des Folienmaterials des Zellgehäuses aufgeschmolzen und zumindest teilweise verdrängt. Von daher besteht im Stand der Technik Gefahr, dass durch die Materialverdrängung der innenliegenden PP-Schicht die Metallschicht des Folienmaterials freigelegt wird. Um ein solches Freilegen der Metallschicht zu vermeiden, ist erfindungsgemäß die folgende Maßnahme durchführbar: So kann in einer Prozessabfolge vor dem Heißsiegelprozess ein Applikationsprozess erfolgen. Im Applikationsprozess wird einer der Gehäuseflansche an seiner Kontaktfläche, in der die Heißsiegelnaht verlaufen wird, eine Zusatz-Materiallage aus zum Beispiel PP aufgebracht. Dadurch ist gewährleistet, dass nach dem Heißsiegelprozess die Metallschicht mit ausreichend PP-Material überdeckt bleibt.

In der vorliegenden Idee sind unter anderem die folgenden Modifikationen vorgenommen: So kann nach dem Ultraschallschweißen mittels des Vibrationswerkzeugs eine zweite Ultraschallbearbeitung in der Schweißzone durchgeführt werden, um die Rauheitsspitzen aus der Schweißzone zu entfernen. Auf diese zweite Ultraschallbearbeitung folgt eine Reinigung, um den metallischen Materialabtrag zu entfernen. In der zweiten Ultraschallbearbeitung findet kein Schweißen statt. Es werden nur Oberflächenverunreinigungen entfernt. Anstelle der zweite Ultraschallbearbeitung kann auch ein Polierverfahren durchgeführt werden, bei dem Keramikpartikel auf die Schweißzone gestrahlt und anschließend gereinigt werden. Das CPP-Tape wird nach diesem Reinigungsprozess aufgetragen.

In einer weiteren Option können an den Beschnittkanten des Folienmaterials Kunststoffabdeckungen angebracht werden, damit kein metallischer Leiter versehentlich die Aluminiumschicht des Folienmaterials berühren kann. Die Kunststoffabdeckungen können gekühlt werden, um die Wärme abzuführen, da die meiste Wärme während des Ladens und Entladens im Bereich des Zellableiters erzeugt wird. Die Kunststoffabdeckungen funktionieren bevorzugt wie eine selbstschließende Klammer und lassen sich daher leicht in die Taschenränder einführen.

In einer weiteren Option kann das für die Herstellung des Zellgehäuses verwendete Folienmaterial (d.h. Kunststoff-Aluminium-Laminat) so beschaffen sein, dass ein Randbereich (zum Beispiel die letzten 2-3 mm) nach dem Versiegeln keine Aluminiumschicht aufweist. Alternativ dazu kann das Kunststoff-Aluminium-Laminat einen kleinen schmalen Bereich von 0,5 mm aufweisen, in dem keine Aluminiumschicht vorhanden ist. Das bedeutet, dass die Aluminiumschicht in dem Zellgehäuse nicht intern verbunden ist und dass aufgrund dieser Lücke die elektronische Schaltung unterbrochen ist und das Isolationsproblem nicht auftritt.

Normalerweise tritt das größte Isolationsproblem während des Heißsiegelprozesses auf. Hier wird die PP-Schicht verdrängt und kann die Aluminiumschicht direkt mit der Isolierung in Kontakt kommen. Daher kann gemäß einer weiteren Option vor dem Versiegeln ein PP-Tape unter dem Versiegelungsbereich angebracht werden. Das heißt, dass zwei PP-Schichten vorhanden sind, nämlich erstens die innenliegende PP-Schicht des Folienmaterials und zweitens das zusätzliche PP-Tape. In diesem Fall ist also stets eine PP-Schicht zwischen Aluminium und dem Elektrolyt vorhanden.

Erfindungsgemäß werden zusammengefasst verschiedene Mechanismen offenbart, die den Isolationswiderstand der Zelle erhöhen. Eine oder alle Lösungen können gleichzeitig angewendet werden. Alle Lösungen werden den Isolationswiderstand erhöhen. Das Ultraschallschweißverfahren wird dort geändert, wo ein zusätzlicher Nachbearbeitungsprozess (entweder durch Vibration oder durch Strahlen mit keramischen Partikeln) stattfindet, so dass die Spitzen der Schweißzone entfernt werden können. Eine zusätzliche Polypropylen-Schicht kann an der Heißsiegelzone eingefügt werden, so dass sich zwischen der Aluminiumschicht des Folienmaterials und dem Elektrolyt immer eine PP-Schicht befindet. Die Kunststoffabdeckung kann am Rand der Zelle befestigt sein, so dass die an der Beschnittkante freiliegende Aluminiumschicht nicht unbeabsichtigt mit einem Leiter in Berührung kommen kann. Die Kunststoffabdeckung kann sich ausdehnen und anschwellen. Sie lässt sich leicht am Rand anbringen, indem die Kunststoffabdeckung gegen eine Federkraft Gummi auseinander gezogen wird und dann losgelassen wird. Der Gummi wirkt wie eine Feder und hält den Rand der Zelle fest. Die wichtigste Innovation besteht in der Schutzlage, die ein CPP-Tape aufweist. Dieses ist mit einem isolierenden Druckkleber und mit feinen Aluminiumoxidpartikeln versehen. Auf diese Weise können die Rauheitsspitzen der Schweißzone nicht in das CPP-Band und auch nicht in das Folienmaterial eindringen.

Normalerweise kommt es zu einem Kurzschluss in der Zelle, wenn leitendes Material mit der freien Kante in Kontakt kommt. Da das Aluminium des Beutels ein Kontinuum bildet, fließt der elektrische Strom durch die gesamte Zelle des Beutels. Das bedeutet, dass wir das Kontinuum der Aluminiumschicht des Beutels unterbrechen müssen. Dies wird durch eine spezielle Art von laminierter Folie erreicht, bei der die Bereiche in der Nähe der Kante keine Aluminiumschicht aufweisen. Durch das Fehlen der Aluminiumschicht wird das Kontinuum des Aluminiums unterbrochen, und der Bereich ohne Aluminium kann keinen Strom leiten.

Die Vorteile der erfindungsgemäßen Maßnahmen sind die folgenden: Der Isolationswiderstand der Zelle bleibt konstant auf hohem Niveau. Es ergibt sich ein geringerer Materialausschuss aufgrund von Isolationsproblemen. Das die Oberflächenbehandlung durch Ultraschallbearbeitung ist ein weniger kritischer Prozess, da die Rauheitsspitzen aus der Schweißzone später entfernt werden. Der Heißsiegelprozess ist weniger kritisch und die Toleranz sind nicht so eng. Die Zellränder werden geschützt und die Zelle erhält eine zusätzliche Isolierung. Die Isolierung der Zelle spielt eine wichtige Rolle bei der Selbstentladung. Ein hoher Isolationswiderstand bedeutet eine geringe Selbstentladung der Zelle. Der Isolationswiderstand wird durch Modifizierung der Aluminiumfolie erhöht. Auf diese Weise wird ein versehentlicher Kurzschluss vermieden. Das modifiziertes CPP-Tape sorgt für eine gute Haftung des Tapes auf der Schweißzone und verhindert außerdem das Eindringen von Schweißspitzen in das CPP-Tape. Es ergibt sich ein höherer Isolationswiderstand vom modifizierte CPP-Tape. Durch die Kunststoffabdeckung an den Rändern der Zelle besteht keine Gefahr eines Kurzschlusses. Die Kunststoffabdeckung trägt auch zu einer schnelleren Kühlung der Registerkarten bei, da sie wasser- oder luftgekühlt ist. Ein Abfall des Isolationswiderstandes ist eines der größten Probleme in der Pouch-Zelle und kann zu thermischem Durchgehen, Selbstentladung und Stromschlag führen. Diese Probleme werden durch sechs angebotene Lösungen vermieden.

Nachfolgend werden Ausführungsbeispiele der Erfindung anhand der beigefügten Figuren beschrieben.

Es zeigen:

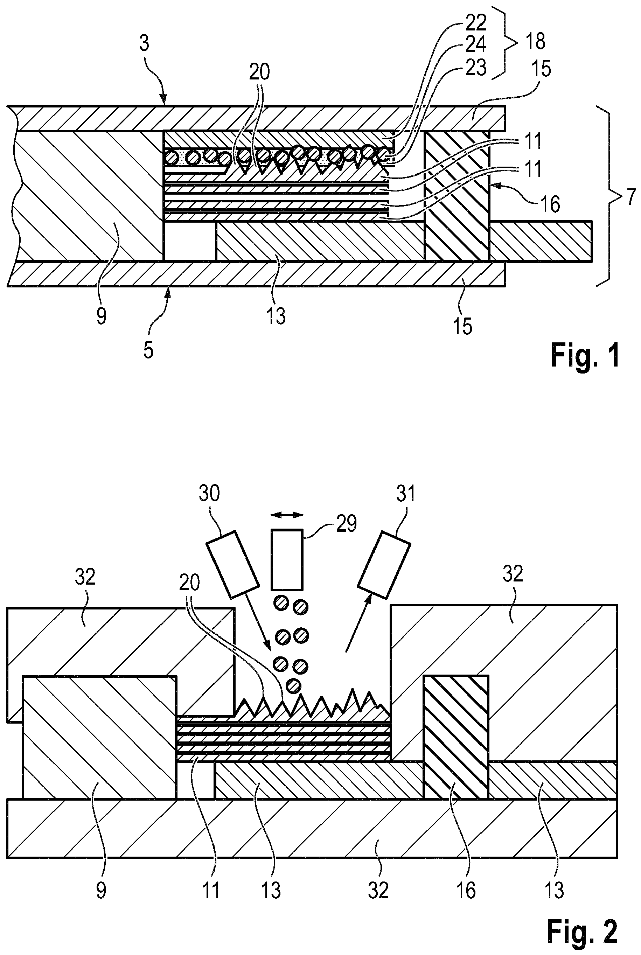

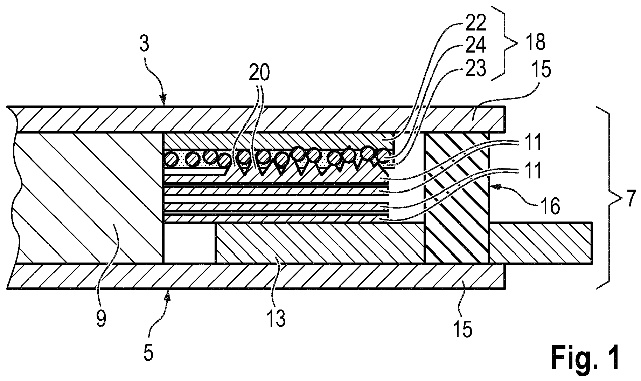

- Figuren 1 bis 15: jeweils Ansichten, anhand derer unterschiedliche Maßnahmen zur Steigerung des elektrischen Widerstands zwischen dem Zellgehäuse der Batteriepouchzelle und den Zellableitern realisiert sind.

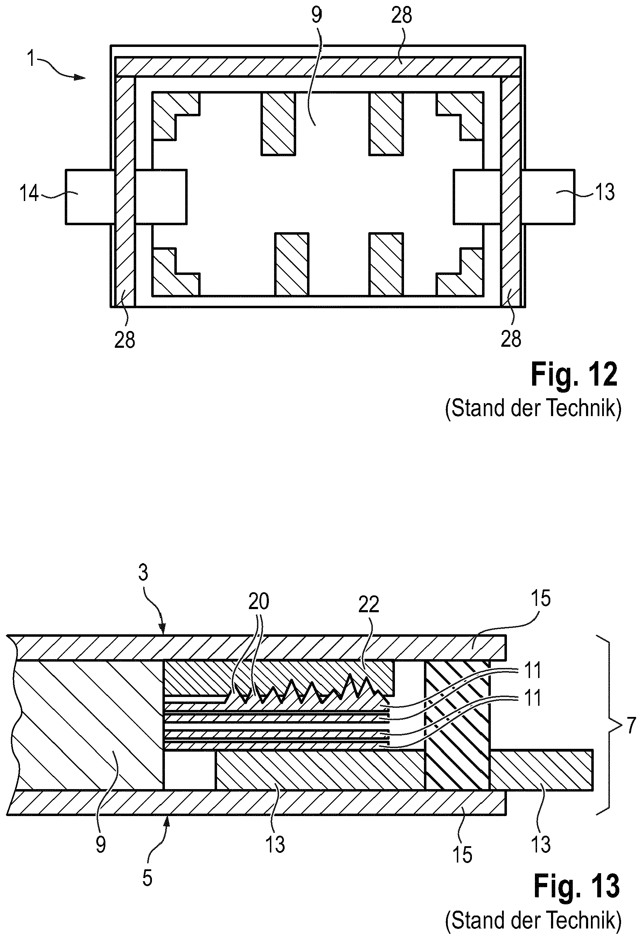

Im Hinblick auf ein einfaches Verständnis der Erfindung wird zunächst Bezug auf die Figuren 12 bis 15 genommen, die ein nicht von der Erfindung umfasstes Vergleichsbeispiel zeigen. Demnach weist die Batteriezelle ein Zellgehäuse 1 (Figur 12) mit zwei gegenüberliegenden Flachseitenwänden 3, 5 (Figur 13) auf, die über Schmalseiten miteinander verbunden sind. Von den Schmalseiten ist in der Figur 13 lediglich eine Schmalseite 7 gezeigt, die als eine Zellgehäuse-Anschlussseite wirkt, an der ein Stromabgriff erfolgt. Im Zellgehäuseinneren ist eine Elektroden-/ Separator-Anordnung 9 positioniert. Deren anodenseitige Ableiterfahnen 11 sind mittels Ultraschallschweißen mit einem anodenseitigen Zellableiter 13 nach gehäuseaußen geführt, um einen Stromabgriff zu ermöglichen. In der Figur 13 ist der anodenseitige Zellableiter 13 zwischen zwei Gehäuseflanschen 15 des Zellgehäuses 1 nach außen geführt, und zwar über ein PP-Dichtmittel 17, das zwischen den beiden Gehäuseflanschen 15 angeordnet ist. In gleicher Weise ist auch der kathodenseitige Zellableiter 14 mit nicht dargestellten kathodenseitigen Ableiterfahnen in Kontakt.

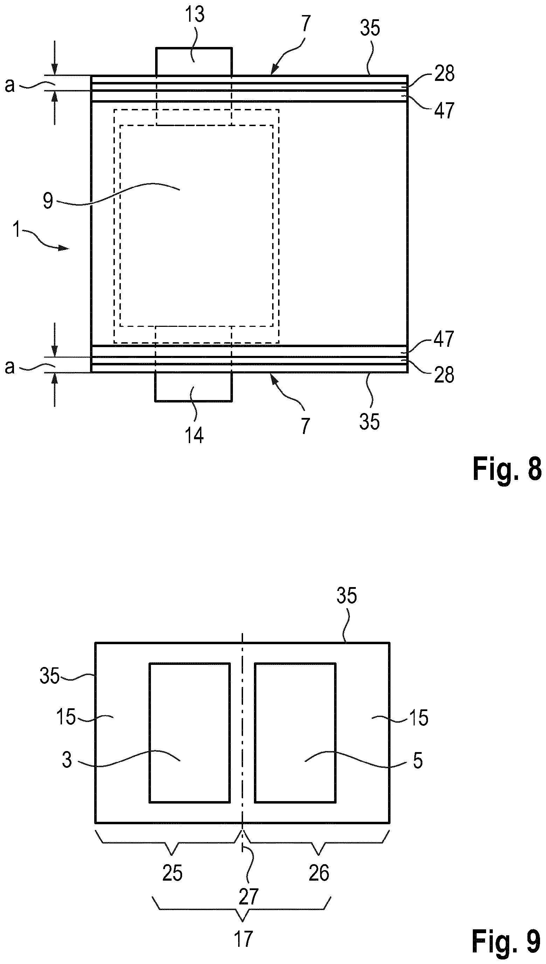

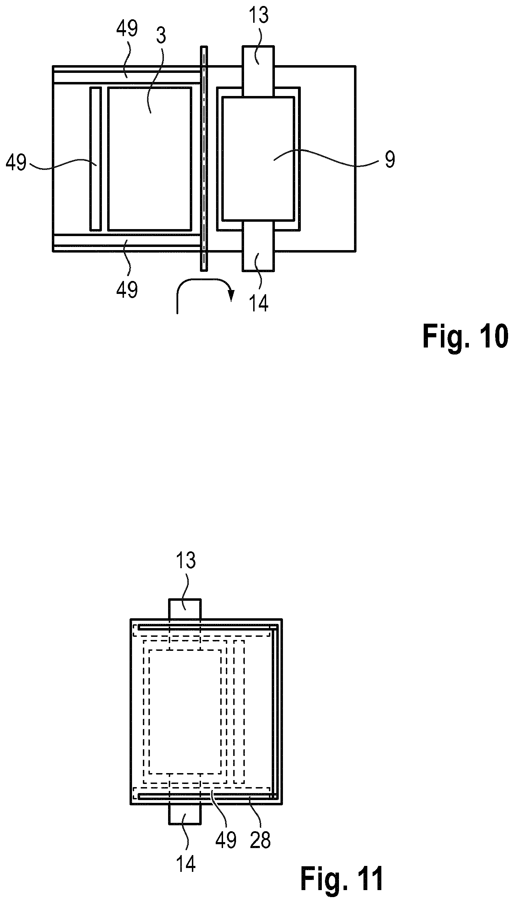

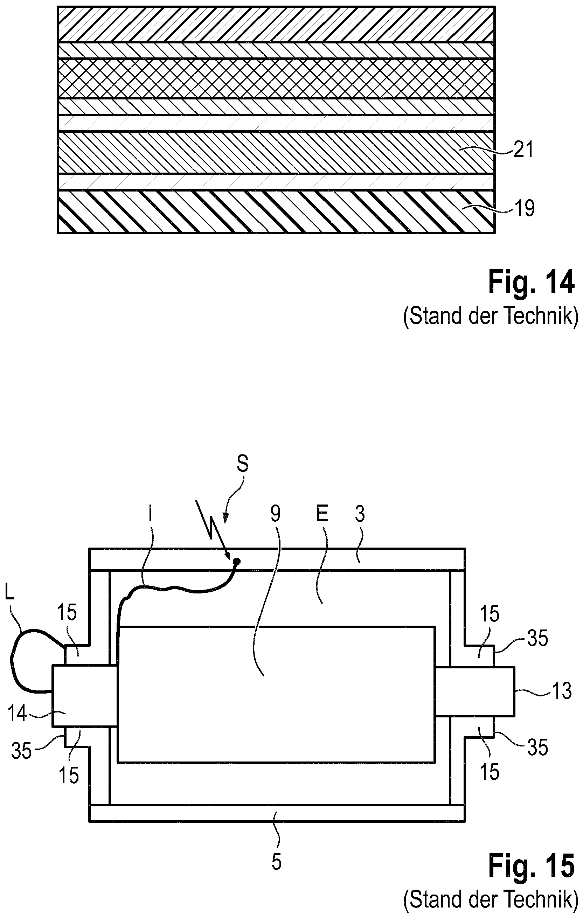

Das Zellgehäuse 1 ist aus einem mehrschichtigen, tiefgezogenen Folienmaterial-Zuschnitt 17 (Figur 9) ausgebildet, dessen Schichtaufbau in der Figur 14 gezeigt ist. Demnach weist der Schichtaufbau unter anderem eine innenliegende PP-Schicht 19 sowie eine mittlere Aluminiumschicht 21 auf. In der Figur 9 ist der Folienmaterial-Zuschnitt 17 in zwei Gehäuseteilen 23, 25 unterteilt, die an einer Faltkante 27 ineinander einstückig übergehen. Jedes der Gehäuseteile 23, 25 ist schalenförmig tiefgezogen, wobei der jeweilige Tiefziehboden die Flachseitenwand 3, 5 bildet, die von den Gehäuseflanschen 15 umzogen ist. In einem Zusammenbauprozess wird der Elektroden-/ Separatorstapel 9 in ein Gehäuseteil 26 eingelegt. Anschließend wird das andere Gehäuseteil 25 um 180° umgeschlagen (Figur 11). Danach folgt ein Heißsiegelprozess, in dem die einander gegenüberliegenden Gehäuseflanschen 15 über eine Siegelnaht 28 miteinander verbunden werden. Im Heißsiegelprozess wird an der Fügestelle die innenliegende PP-Schicht 19 sowie das PP-Dichtmittel 17 aufgeschmolzen, sodass sich die Gehäuseflansche 17 der beiden Gehäuseteile 25, 26 stoffschlüssig miteinander verbinden.

Bei einer derart ausgebildeten Batteriepouchzelle ergeben sich die nachfolgend beschriebenen Problemstellungen. Eine erste Problemstellung beruht auf dem folgenden Sachverhalt: Üblicherweise werden die Ableiterfahnen 11 zunächst zusammengefügt und dann mit dem Anoden-Zellableiter 13, d.h. einer Kupfer-Nickel-Lasche, durch Ultraschallschweißen verschweißt. In ähnlicher Weise werden die (nicht gezeigten) Ableiterfahnen auf der Kathodenseite zusammengefügt und dann durch Ultraschallschweißen mit einem Kathoden-Zellableiter 14, d.h. einer Aluminiumlasche, verschweißt. Beim Ultraschallschweißen werden die beiden sich berührenden Materialien in Schwingung versetzt. Dadurch wird die Oxidschicht der Ableiterfahne 11 und des Zellableiters 13, 14 aufgebrochen und es kommt zu einem atomaren Kontakt. Während der Vibration wird die Schweißzone rau und bilden sich metallische Rauheitsspitzen 20. Auf der Kathodenseite ist dieses Problem schwerwiegender, da Aluminium eine geringere Festigkeit als Kupfer aufweist. Wenn diese Rauheitsspitzen 20 aus der Schweißzone die innenliegende Polypropylenschicht 19 des Zellgehäuses 1 durchstoßen und bis zur Aluminiumschicht 21 in das Folienmaterial des Zellgehäuses 1 eindringen, sinkt der Isolationswiderstand der Pouchzelle drastisch.

In dem in der Figur 13 gezeigten Vergleichsbeispiel befindet sich zwischen der Schweißzone und dem Folienmaterial des Zellgehäuses 1 ein CPP-Tape (Cast Polypropylene) als Isolierlage 22. Die Isolierlage 22 wirkt wie eine elektrische Isolierung zwischen der Schweißzone und dem Folienmaterial des Zellgehäuses 1. Manchmal sind jedoch die beim Ultraschallschweißen gebildeten Rauheitsspitzen 20 derart scharfkantig, dass sie das CPP-Tape und auch die innenliegende Polypropylenschicht 19 des Folienmaterials des Zellgehäuses 1 durchdringen und in Kontakt mit der Aluminiumschicht 21 gelangen. In diesem Fall kann der Zellableiter 13 direkt mit der Aluminiumschicht 21 des Folienmaterials in elektrischen Kontakt kommen, was eine Reduzierung des Isolationswiderstands verursachen würden. Ein reduzierter Isolationswiderstand kann zu einer stärkeren Entladung der Zelle und im schlimmsten Fall zu einem Kurzschluss führen. Ein solcher Abfall des Isolationswiderstands ist eines der größten Probleme bei Li-lonen-Pouchzellen. In der Figur 13 ist das CPP-Tape am Folienmaterial des Zellgehäuses 1 fixiert, jedoch nur in losem Kontakt mit der rauen Oberflächengeometrie auf der von der Schweißstelle abgewandten Ableiter-Seite, so dass sich das CCP-Tape gegenüber der Schweißzone verschieben kann. Wie aus der Figur 13 weiter hervorgeht, ist das CPP-Tape nicht in fester Verbindung mit der Schweißzone. Die Gefahr einer Lageverschiebung ist damit groß.

Gemäß einer zweiten Problemstellung kann es zu einem indirekten elektrischen Kontakt zwischen dem Zellableiter 13, 14 und der Aluminiumschicht 21 im Folienmaterial des Zellgehäuses 1 kommen. Die zweite Problemstellung beruht auf folgendem Sachverhalt: Wenn die Oberfläche des Folienmaterials des Zellgehäuses 1 an einer Schadensstelle S (Figur 15) zerkratzt und die innenliegende Polypropylenschicht 19 beschädigt ist, kann die Aluminiumschicht 21 des Folienmaterials direkt mit dem Elektrolyt E (Figur 15) in Kontakt kommen. Derselbe Elektrolyt E ist auch in Kontakt mit dem Zellableiter 13, 14. Das bedeutet, dass eine lonenbewegung I zwischen der Aluminiumschicht 21 des Folienmaterials und dem Zellableiter 13, 14 möglich ist. Wenn es zudem mittels eines elektrischen Leiters L (Figur 15) zu einer unbeabsichtigten Verbindung zwischen der an der Beschnittkante 35 des Folienmaterials freiliegenden Aluminiumschicht 21 und dem Zellableiter 13 außerhalb der Zelle kommt, ergibt sich ein geschlossener Stromkreis. Das bedeutet, dass sowohl ein Ionentransport I als auch ein Elektronentransport erfolgt. Die Aluminiumschicht 21 im Folienmaterial wirkt daher wie eine Kathode, sofern der anodenseitige Zellableiter 13 mit der an der Beschnittkante 35 freiliegenden Aluminiumschicht 21 in Kontakt kommt. Dies führt zur Selbstentladung der Zelle und vor allem zur Korrosion der Aluminiumschicht 21 im Folienmaterial. Dieses Problem tritt häufig im Heißsiegelbereich des Zellgehäuses 1 auf. Manchmal wird die innenliegende PP-Schicht 19 durch die Einwirkung von Fluorwasserstoffgas beschädigt. Auf diese Weise wird die Aluminiumschicht 21 des Folienmaterials freigelegt. Im Siegelbereich kann es vorkommen, dass die Temperatur und der Druck derart hoch sind, dass die PP-Schicht 19 verdrängt wird. Dies kann ebenfalls zur Freilegung der Aluminiumschicht 21 des Folienmaterials führen. Normalerweise sorgt der indirekte Kontakt zwischen der Aluminiumschicht 21 des Folienmaterials und dem Zellableiter 13, 14 über den Elektrolyt E nur für einen Ionentransport I. Wenn es keinen metallischen Kontakt zwischen der an der Beschnittkante 35 freiliegenden Aluminiumschicht 21 und dem Zellableiter 13, 14 gibt, ist kein elektronischer Stromkreis vorhanden. In diesem Fall kann kein Strom fließen. Es ist jedoch möglich, dass Stromschienen und andere metallische Komponenten des Moduls versehentlich mit der an der Beschnittkante 35 freiliegenden Aluminiumschicht 21 und mit dem Zellableiter 13, 14 in Kontakt kommen. Daher werden alle Zellen im End-of-Line-Test absichtlich auf ihren Isolationswiderstand geprüft. Dabei wird absichtlich ein elektronischer Stromkreis zwischen der an der Beschnittkante 35 freiliegenden Aluminiumschicht 21 und dem Zellableiter 13, 14 hergestellt. Wenn der Stromkreis durch das freiliegende Aluminium des Zellgehäuses 1 geschlossen ist, wird ein Isolationsabfall sichtbar. Die Zelle gilt dann als nicht in Ordnung und wird als Ausschuss eingestuft.

Eine dritte Problemstellung betrifft die galvanische Korrosion der Aluminiumschicht 21 des Folienmaterials durch eine Elektrolyteinwirkung. Wie bereits mit Bezug auf die zweite Problemstellung erwähnt, ist für eine Selbstentladung sowohl ein Ionentransport I als auch ein Elektronenbewegung erforderlich. Bei Kontakt der Aluminiumschicht 21 des Folienmaterials mit Elektrolyt und HF-Gas, korrodiert diese. Die Aluminiumschicht 21 ist nur 40 µm dick. Wenn sich die Aluminiumschicht 21 auflöst, gibt es keine Stabilität mehr und das Folienmaterial kann Löcher bekommen.

Eine vierte Problemstellung betrifft die Beschnittkanten 35 des Folienmaterials, an denen die Aluminiumschicht 21 freigelegt ist. Bei Kontakt der an der Beschnittkanten 35 freigelegten Almuniumschicht 21 mit einem metallischen Leiter L kann die Aluminiumschicht 21 Elektronen übertragen. Die Beschnittkanten 35 sind auch sehr anfällig für Beschädigungen. Zurzeit gibt es im Stand der Technik keinen isolierenden Schutz für die Beschnittkanten 35.

In Abkehr zu dem in den Figuren 12 bis 15 gezeigten Vergleichsbeispiel sind erfindungsgemäß die nachfolgend beschriebenen Maßnahmen getroffen, um den Isolationswiderstand zwischen dem Zellgehäuse 1 und den Zellableiter 13, 14 zu erhöhen: Eine erste Maßnahme ist in der Figur 1 veranschaulicht. Demnach ist - in Dickenrichtung der Ableiterfahne 11 betrachtet - auf der von der Schweißstelle abgewandten Ableiterfahnen-Seite und dem Folienmaterial des Zellgehäuses 1 ist eine zusätzliche Schutzlage 18 bereitgestellt, mit der in Doppelfunktion nicht nur eine elektrische Isolation zwischen den Ableiterfahnen 11 und dem Zellgehäuse 1 gewährleistet ist, sondern darüber hinaus auch ein Schutz des Folienmaterials vor Intrusion der Rauheitsspitzen 20 gewährleistet ist.

Im Unterschied zur Figur 13 (Stand der Technik) ist in der Figur 1 zwischen der rauen Oberflächengeometrie der von der Schweißstelle abgewandten Ableiterfahnen-Seite und dem Folienmaterial des Zellgehäuses 11 die Schutzlage 18 mehrschichtig aufgebaut, und zwar aus der Isolierschicht 22, die ein CPP-Tape ist, und einer Klebschicht 23. In der Klebschicht 23 sind Keramikpartikel eingebettet mit deren Hilfe eine Intrusion der Rauheitsspitzen in das Folienmaterial des Zellgehäuses 1 verhindert ist. Eine Intrusion der Rauheitsspitzen 20 in das Folienmaterial des Zellgehäuses 1 ist daher zuverlässig unterbunden.

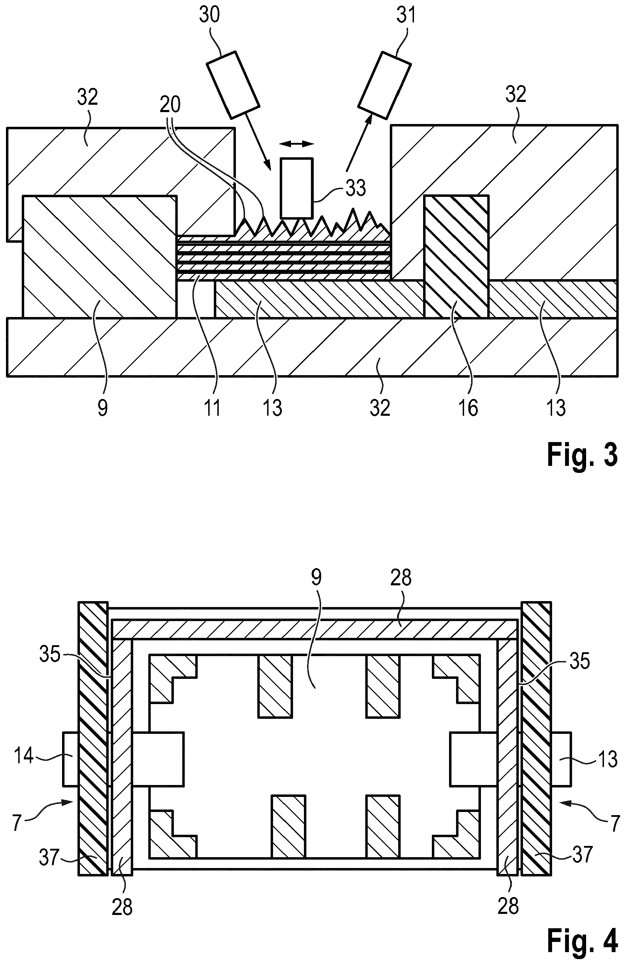

Anhand der Figuren 2 und 3 wird eine zweite Maßnahme veranschaulicht. Demzufolge wird in einer Prozessabfolge nach dem Ultraschallschweißschritt, in dem die Ableiterfahnen 11 mit dem Zellableiter 13 verbunden werden, ein in den Figuren 2 oder 3 gezeigter Oberflächenbehandlungsschritt durchgeführt. In dem Oberflächenbehandlungsschritt wird die raue Oberflächengeometrie auf der von der Schweißstelle abgewandten Ableiterfahnen-Seite geglättet. In der Figur 1 ist die Oberflächenbehandlung durch ein Strahlverfahren realisiert, in dem Keramikpartikel mit Hilfe einer Strahldüse 29 auf die raue Oberflächengeometrie beaufschlagt werden. Der Strahldüse 29 ist eine Druckluftdüse 30 und eine Saugdüse 31 zugeordnet, wodurch ein Luftstrom generiert wird, der die Keramikpartikel mitsamt Materialabtrag ableitet. Die zu den Ableiterfahnen 11 benachbarten Komponenten, das heißt Elektroden-/ Separator-Anordnung 9 sowie der nach gehäuseaußen geführte Bereich des Zellableiters 13 sind durch eine Schutzabdeckung 32 abgedeckt, um einen Eintritt der Partikel in die Elektroden-/ Separator-Anordnung 9 oder in den Zellableiterbereich zu vermeiden.

In der Figur 3 erfolgt der Materialabtrag alternativ mit Hilfe eines Vibrationswerkzeugs 33, mit dessen Hilfe die Rauheitsspitzen 20 geglättet werden, ohne die Fügestelle der Ableiterfahnen 11 und dem Zellableiter 13 zu beschädigen.

Anhand der Figuren 4 bis 6 ist eine weitere Maßnahme veranschaulicht, um den Isolationswiderstand zwischen dem Zellgehäuse 1 und den Zellableitern 13, 14 zu steigern. Diese Maßnahmen beruht auf dem Sachverhalt, dass die Aluminiumschicht 21 im mehrschichtigen Folienmaterial-Zuschnitt an einer Beschnittkante 35 am Rand des jeweiligen Gehäuseflansches 15 nach außen freigelegt ist. Gemäß der Figur 4 ist eine Kunststoffabdeckung 37 an den beiden Zellgehäuse-Anschlussseiten 7 bereitgestellt, die die jeweiligen Beschnittkanten 35 des Folienmaterial-Zuschnitts 17 überdecken. Auf diese Weise wird ein unbeabsichtigter elektrischer Kontakt zwischen der freiliegenden Metallschicht 21 und dem jeweiligen Zellableiter 13, 14 unterbunden. Ein solcher unbeabsichtigter elektrischer Kontakt kann beispielhaft über einen elektrischen Leiter L (Figur 15) erfolgen, der die an der Beschnittkante 35 freiliegende Aluminiumschicht 21 mit dem jeweiligen Zellableiter 13, 14 verbindet.

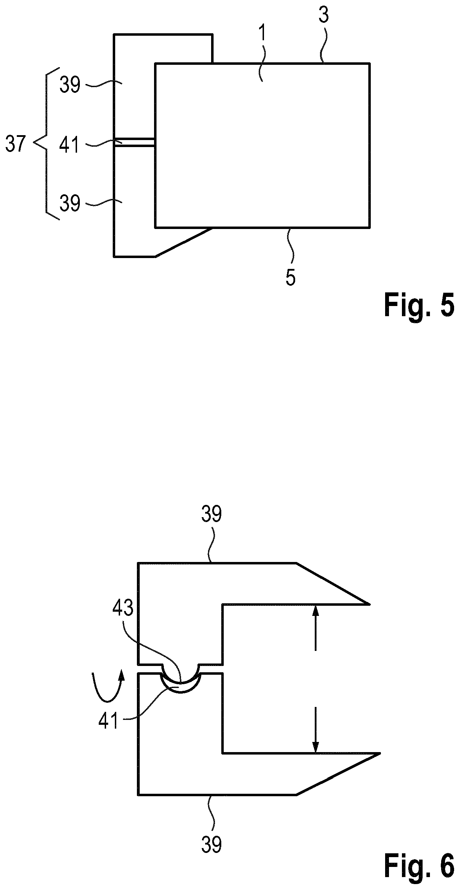

Wie aus den Figuren 5 und 6 hervorgeht, ist die Kunststoffabdeckung 37 an jeder der Zellgehäuse-Anschlussseiten 7 zweiteilig ausgeführt, und zwar aus zwei Klemmbacken 39, die jeweils in Druckanlage mit einer der Flachseitenwände 3, 5 bringbar ist. Die beiden Klemmbacken 39 sind über ein Federelement 41 miteinander gekoppelt. Gemäß der Figur 6 sind die beiden Klemmbacken 39 zudem über ein Gelenk 43 miteinander gekoppelt, das eine angedeutete Schwenkbewegung zwischen den beiden Klemmbacken 39 ermöglicht.

In den Figuren 5 und 6 wirkt die Kunststoffabdeckung 37 wie eine Klammer und kann diese leicht auf die Kanten der Zelle aufgesetzt werden. Sie kann durch Wasser oder Luft gekühlt werden, so dass der Zellableiter-Bereich während des Lade- und Entladevorgangs gekühlt wird. Wie aus der Figur 6 weiter hervorgeht, ist das Gelenk 43 nach Art eines Kugelgelenks gebildet. D.h. dass sich die Klemmbacken 39 gegen eine Federkraft öffnen können und mittels der Federkraft schließen können. Auf diese Weise kann die Kunststoffabdeckung 37 ein Anschwellen der Zelle ausgleichen und kann diese einfach an die Zelle gebaut werden.

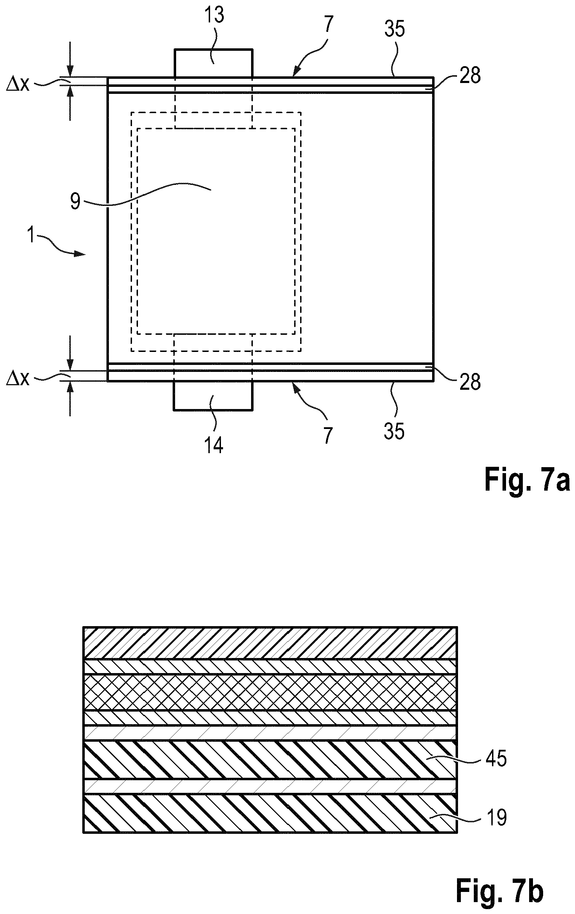

Anhand der Figur 7a und 7b ist eine weitere Maßnahme veranschaulicht: Gemäß der Figur 7a ist die Aluminiumschicht 21 an der jeweiligen Zellgehäuse-Anschlussseite 7 nicht mehr bis zur äußeren Randkante (d.h. Beschnittkante 35) des jeweiligen Gehäuseflansches 17 geführt, sondern vielmehr um ein Versatzmaß Δx von der Randkante 35 beabstandet. Die Aluminiumschicht 21 ist daher an der Gehäuseflansch-Randkante 35 nicht mehr nach außen freigelegt, wodurch ein unbeabsichtigter elektrischer Kontakt mit einem elektrischen Leiter L (Figur 15) verhindert ist. Die Aluminiumschicht 21 ist vielmehr über das Versatzmaß Δx mit einer elektrisch isolierenden Kunststoffschicht 45 (Figur 7b) bis zur Gehäuseflansch-Randkante 35 verlängert.

In Abkehr zu den Figuren 7a und 7b ist in der Figur 8 die Aluminiumschicht 21 zwar bis unmittelbar an die Gehäuseflansch-Randkante 35 herangeführt, jedoch mit einem Abstand Δa zur Randkante 35 die Aluminiumschicht 21 durch einen metallfreien, elektrisch nicht leitfähigen Bereich 47 unterbrochen.

Anhand der Figuren 9 bis 11 ist eine weitere Maßnahme beschrieben. Diese beruht auf den Sachverhalt, dass im Heißsiegelprozess zur Bildung der Siegelnaht 28 die innenliegende PP-Schicht 19 aufgeschmolzen und zumindest teilweise verdrängt wird. Durch diese Materialverdrängung kann gegebenenfalls die Aluminiumschicht 21 nach gehäuseinnen freigelegt werden, wodurch sich ein unbeabsichtigter elektrischer Kontakt mit zum Beispiel dem Elektrolyt E ergeben kann. Vor diesem Hintergrund wird in der Figur 10 in einer Prozessabfolge vor dem Heißsiegelprozess (Figur 11) eine Applikationsprozess durchgeführt. Im Applikationsprozess wird auf den Gehäuseflanschen 17 eine Zusatz-Materiallage 49 aus PP (d.h. Polypropylen) aufgebracht. Auf diese Weise ist gewährleistet, dass nach dem Heißsiegelprozess die Aluminiumschicht 21 nach wie vor mit ausreichend großer PP-Material überdeckt bleibt.

### Bezugszeichenliste

- 1: Zellgehäuse
- 3, 5: Flachseitenwände
- 7: Zellgehäuse-Anschlussseite
- 9: Elektroden-/ Separator-Anordnung
- 11: Ableiterfahnen
- 13, 14: Zellableiter
- 15: Gehäuseflansche
- 16: PP-Dichtmittel
- 17: Folienmaterial-Zuschnitt
- 19: innenliegende PP-Schicht
- 20: Rauheitsspitzen
- 21: mittlere Aluminiumschicht
- 22: Schutzlage
- 23: Klebschicht
- 24: Keramikpartikel
- 25, 26: Gehäuseteile
- 27: Faltkante
- 28: Siegelnaht
- 29: Strahldüse
- 30: Druckluftdüse
- 31: Saugdüse
- 32: Schutzabdeckung
- 33: Vibrationswerkzeug
- 35: Beschnittkante/Randkante
- 37: Kunststoffabdeckung
- 39: Klemmbacken
- 41: Federelement
- 43: Gelenk
- 45: Kunststoffschicht
- 47: nicht leitender Bereich
- 49: Zusatzmateriallage
- Δx: Versatzmaß
- Δa: Abstand
- L: Leiter
- S: Schwachstelle
- E: Elektrolyt
- I: Ionentransport

## Patentansprüche

1. Batteriepouchzelle, in deren Zellgehäuse (1) eine Elektroden-/ Separator-Anordnung (9) mit zumindest einer Ableiterfahne (11) angeordnet ist, die mit einem Zellableiter (13, 14) verbunden ist, der für einen Stromabgriff nach gehäuseaußen geführt ist, wobei die Ableiterfahne (11) und der Zellableiter (13, 14) einander überlappt sind und am Überlapp mittels Ultraschallschweißen zusammengefügt sind, wobei auf der von der Schweißstelle abgewandten Ableiterfahnen-Seite sich schweißbedingt eine raue Oberflächengeometrie mit Rauheitsspitzen (20) bildet, **dadurch gekennzeichnet, dass** zwischen der rauen Oberflächengeometrie der von der Schweißstelle abgewandten Ableiterfahnen-Seite und dem Folienmaterial des Zellgehäuses (1) eine Schutzlage (18) bereitgestellt ist, mittels der eine Intrusion der Rauheitsspitzen (20) in das Folienmaterial des Zellgehäuses (1) unterbunden ist.

2. Batteriepouchzelle nach Anspruch 1, **dadurch gekennzeichnet, dass** die Schutzlage (18) auf der Innenseite des Zellgehäuses (1) appliziert ist, und/oder dass die Schutzlage (18) ein CPP-Tape (Cast-Polypropylene-Tape) ist, und/oder dass in der Schutzlage (18) Keramikpartikel (24), insbesondere Aluminiumoxid-Keramikpartikel, eingebettet sind, und/oder dass die Schutzlage (18) eine Klebschicht (23) aufweist, mittels der die Schutzlage (18) auf der von der Schweißstelle abgewandten Ableiterfahnen-Seite angebunden ist, und/oder dass die Keramikpartikel (24) in der Klebschicht (23) eingebettet sind.

3. Batteriepouchzelle, insbesondere nach einem der vorhergehenden Ansprüche, in deren Zellgehäuse (1) eine Elektroden-/ Separator-Anordnung (9) mit zumindest einer Ableiterfahne (11) angeordnet ist, die mit einem Zellableiter (13, 14) verbunden ist, der für einen Stromabgriff nach gehäuseaußen geführt ist, wobei die Ableiterfahne (11) und der Zellableiter (13, 14) einander überlappt sind und am Überlapp mittels Ultraschallschweißen zusammengefügt sind, wobei auf der von der Schweißstelle abgewandten Ableiterfahnen-Seite sich schweißbedingt eine raue Oberflächengeometrie mit Rauheitsspitzen (20) bildet, **dadurch gekennzeichnet, dass** in einer Prozessabfolge nach dem Ultraschallschweißschritt ein Oberflächenbehandlungsschritt durchgeführt wird, in dem die raue Oberflächengeometrie auf der von der Schweißstelle abgewandten Ableiterfahnen-Seite geglättet wird, und zwar insbesondere ohne die Schweißstelle zu beschädigen.

4. Batteriepouchzelle nach Anspruch 3, **dadurch gekennzeichnet, dass** der Oberflächenbehandlungsschritt ein Strahlverfahren ist, in dem die raue Oberflächengeometrie mit Keramikpartikeln beaufschlagt wird, oder dass der Oberflächenbehandlungsschritt eine Werkzeugbearbeitung ist, in der die raue Oberflächengeometrie zum Beispiel mittels eines Vibrationswerkzeugs (33) geglättet wird.

5. Batteriepouchzelle, dessen Zellgehäuse (1) aus zwei Gehäuseteilen (25, 26) ausgebildet ist, die an ihren Gehäuseflanschen (15) zum Beispiel mittels einer Heißsiegelnaht (28) zusammengefügt sind, und mit zumindest einem Zellableiter (13, 14), der an einer Zellgehäuse-Anschlussseite (7) zwischen den Gehäuseflanschen (15) nach gehäuseaußen geführt ist, wobei das Zellgehäuse (1) aus zumindest einem mehrschichtigen Folienmaterial-Zuschnitt (17) mit zumindest einer Metallschicht (21) gefertigt ist, und wobei die Metallschicht (21) an einer Beschnittkante (35) am Rand des Gehäuseflansches (15) freiliegt, **dadurch gekennzeichnet, dass** die Batteriepouchzelle zumindest eine Kunststoffabdeckung (37) aufweist, die zumindest an der Zellgehäuse-Anschlussseite (7) die Beschnittkante (35) überdeckt, so dass ein unbeabsichtigter elektrischer Kontakt zwischen der freiliegenden Metallschicht (21) und dem Zellableiter (13, 14) unterbunden ist.

6. Batteriepouchzelle nach einem der vorhergehenden Ansprüche, **dadurch gekennzeichnet, dass** das Zellgehäuse (1) quaderförmig mit zwei planparallelen Flachseitenwänden (3, 5) ausgebildet ist, die über Schmalseitenwände (7) miteinander verbunden sind, und dass insbesondere zumindest eine der Schmalseitenwände die Zellgehäuse-Anschlussseite (7) bildet, und/oder dass insbesondere die Kunststoffabdeckung (37) zweiteilig aus zwei Klemmbacken (39) ausgebildet ist, die in Druckanlage mit den Flachseitenwänden (3, 5) des Zellgehäuses (1) sind und eine Vorspannkraft auf das Zellgehäuse (1) ausüben, und/oder dass insbesondere die beiden Klemmbacken (39) über ein Federelement (41) und/oder über eine Gelenk (43) miteinander gekoppelt sind.

7. Batteriepouchzelle, dessen Zellgehäuse (1) aus zwei Gehäuseteilen (25, 26) ausgebildet ist, die an ihren Gehäuseflanschen (15) zum Beispiel mittels einer Heißsiegelnaht (28) zusammengefügt sind, und mit zumindest einem Zellableiter (13, 14), der an einer Zellgehäuse-Anschlussseite (7) zwischen den Gehäuseflanschen (15) nach gehäuseaußen geführt ist, wobei das Zellgehäuse (1) aus einem mehrschichtigen Folienmaterial mit zumindest einer Metallschicht (21) gefertigt ist, **dadurch gekennzeichnet, dass** die Metallschicht (21) zumindest an der Zellgehäuse-Anschlussseite (7) nicht bis zur Randkante (35) des Gehäuseflansches (15) geführt ist, sondern um ein Versatzmaß (Δx) von der Randkante (35) des Gehäuseflansches (15) beabstandet ist, so dass die Metallschicht (21) nicht nach außen freigelegt ist, oder dass die Metallschicht (21) zumindest an der Zellgehäuse-Anschlussseite (7) bis zur Randkante (35) des Gehäuseflansches (15) geführt ist, und mit einem Abstand (Δa) zur Randkante (35) durch einen metallfreien, elektrisch nicht leitfähigen Bereich (47) unterbrochen ist.

8. Batteriepouchzelle nach Anspruch 7, **dadurch gekennzeichnet, dass** die Metallschicht (21) über das Versatzmaß (Δx) hinweg mit einer elektrisch isolierenden Kunststoffschicht (45) bis zur Randkante (35) des Gehäuseflansches (15) verlängert ist.

9. Batteriepouchzelle, dessen Zellgehäuse (1) aus zwei Gehäuseteilen (25, 26) ausgebildet ist, die an ihren Gehäuseflanschen (15) in einem Heißsiegelprozess mittels einer Heißsiegelnaht (28) miteinander verbindbar sind, und mit zumindest einem Zellableiter (13, 14), der an einer Zellgehäuse-Anschlussseite (7) zwischen den Gehäuseflanschen (15) nach gehäuseaußen geführt ist, wobei das Zellgehäuse (1) aus einem mehrschichtigen Folienmaterial mit zumindest einer Metallschicht (21) und einer innenliegenden Kunststoffschicht (19), insbesondere PP-Schicht, gefertigt ist, die im Heißsiegelprozess aufgeschmolzen und zumindest teilweise verdrängt wird, **dadurch gekennzeichnet, dass** in einer Prozessabfolge vor dem Heißsiegelprozess ein Applikationsprozess erfolgt, in dem auf einem der Gehäuseflansche (15) an seiner Kontaktfläche, in der Heißsiegelnaht (28) verlaufen wird, eine Zusatz-Kunststofflage (49) insbesondere aus PP aufgebracht wird, wodurch gewährleistet ist, dass nach dem Heißsiegelprozess die Metallschicht (21) mit ausreichend Kunststoffmaterial, insbesondere PP, überdeckt bleibt.

10. Verfahren zur Herstellung einer Batteriepouchzelle nach einem der vorhergehenden Ansprüche.
